(19) Europäisches Patentamt

European Patent Office

Office européen des brevets

(11) **EP 1 674 489 A1**

(12) **EUROPEAN PATENT APPLICATION**

(43) Date of publication:
28.06.2006 Bulletin 2006/26

(51) Int Cl.:
*C08F 297/04* (2006.01)    *C09J 153/02* (2006.01)
*C09J 195/00* (2006.01)

(21) Application number: 04106975.8

(22) Date of filing: 23.12.2004

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(71) Applicant: **KRATON Polymers Research B.V.
1030 BH  Amsterdam (NL)**

(72) Inventors:
• **Trommelen, Erik A.T.
1030BH Amsterdam (NL)**

• **van Dijk, Cornelis Martinus
1031 CM, Amsterdam (NL)**
• **De Keyzer, Noel Raymond Maurice
B-1348, Ottignies - Louvain-La-Neuve (BE)**

(74) Representative: **Kortekaas, Marcel C.J.A. et al
KRATON Polymers Research B.V.
P.O. Box 37666
1030 BH  Amsterdam (NL)**

(54) **Block copolymer compositions comprising a tetrablock and a diblock copolymers, obtained by sequential polymerization and reinitiation**

(57)    Block copolymer compositions comprising:

a) a tetrablock copolymer of the formula $S_1$-$D_1$-$D_2$-$S_2$ wherein $S_1$ and $S_2$ represent the same or different polymer blocks of predominantly styrene wherein $D_1$ and $D_2$ represent different polymer blocks, derived from at least one predominantly conjugated diene,

b) a diblock copolymer of the formula $S_1$-$D_1$ or $S_2$-$D_2$.

and a process for their manufacture.

**EP 1 674 489 A1**

Printed by Jouve, 75001 PARIS (FR)

## Description

## Technical field

The present invention relates to block copolymer compositions, comprising at least one multiblock copolymer and at least one diblock copolymer, to the use of said block copolymer compositions in adhesive applications and roofing applications, and to a process for their preparation.

More in particular the present invention relates to block copolymer compositions which are to be applied in adhesive compositions for packaging tapes, labels and the like and adhesive compositions to be used in constructing sanitary articles comprising non-wovens, and for roofing compositions and more in particular for self-adhesive roofing applications.

## Background art

Mixtures of linear multiblock copolymers and in particular triblock copolymers, comprising at least two block derived from predominantly styrene and at least one block derived from one or more conjugated dienes, in combination with diblock copolymers, comprising similar block types, are used already for a long time in the adhesive industry in roofing/road compositions and in modified engineering thermoplast compositions.

For example from **EP 0729482 A** block copolymer compositions to be applied in footwear articles or shaped modified engineering thermoplasts were known, wherein the block copolymer compositions comprised for a major part of linear triblock copolymers, comprising two terminal predominantly poly(monovinylaromatic) blocks having a real molecular weight in the range of from 5,000 to 25,000 and one predominantly poly(butadiene) midblock, said triblock copolymer having a monovinylaromatic content in the range of from 10 to 55 wt%, an apparent total molecular weight in the range of from 15,000 to 3000,000, and an amount of from 0 to 40 wt% of a diblock copolymer relative to the total block copolymer composition weight, containing a predominantly poly(monovinylaromatic) block and a predominantly poly(butadiene) block similar to those of the triblock copolymer component.:

More in particular said block copolymer compositions were prepared by a sequential polymerisation in the presence of a monovalent organolithium initiation and an inert hydrocarbon solvent of a styrene monomer until substantially complete conversion of the monomer; addition of predominantly 1,3-butadiene and polymerisation until substantially complete conversion; optionally adding a second portion of the monovalent organolithium initiator; followed by addition of a second portion of predominantly butadiene; and allowing this monomer to polymerize until substantially complete conversion; addition of a randomizing agent; and addition of a second portion of predominantly styrene monomer and polymerization until substantially complete conversion termination of living polymer and recovery of the obtained block copolymers.

From **EP 0940440 A**, a block copolymer composition was known for modifying asphalt, which comprised a mixture of (A) a block copolymer comprising at least two polymer blocks, each mainly comprising a monoalkyl aromatic compound; and at least one polymer block mainly comprising a conjugated diene compound, and (B) a block copolymer comprising at least one polymer block mainly comprising a monoalkenyl aromatic compound and at lest one copolymer block mainly comprising a conjugated diene compound and having a molecular weight equivalent to 1/3 to 2/3 of the molecular weight of block copolymer A, wherein (a) the total bonding alkenyl aromatic compound content in the mixture of block copolymer (A) and (B) was from 10 to 50 wt%, wherein (b) the vinyl bond content in the conjugated diene polymer blocks was not greater than 70 wt%, and wherein the block copolymer composition has: (c) a content of (A) component of from 98 to 20 wt% and a content of (B) component of from 2 to 80 wt%; (d) a melt index value of from 0.3 to 15.0 g/10 min; (e) a bulk density of from 0,1 to 0,7; (f) a particle size distribution such that the contents of constituents remaining on a 5-mesh sieve were not greater than 30% and the content of constituents passing through a 20-mesh sieve was not greater than 30 %, and (g) a total pore volume of from 100 to 2,000 $mm^3$/g.

From **EP 1229059 A** a block copolymer was known, comprising at least two S polymer blocks comprising vinyl aromatic hydrocarbon monomer units, and one or more B polymer blocks which contains or collectively contain isoprene monomer units and 1,3-butadiene units, wherein the amount of vinyl aromatic hydrocarbon monomer units and the total amount of the isoprene monomer units and the 1,3-butadiene monomer units are, respectively, from 60 to 95% by weight and from 40 to 5% by weight, each based on the weight of the copolymer, wherein the isoprene monomer unit/1,3-butadiene monomer unit weight ratio is from 45/55 to 97/3, and wherein the vinyl aromatic hydrocarbon monomer unit moiety of the copolymer has a short segment ratio of from 0 to 30% by weight, which is defined as the weight percentage, based on the total weight of vinyl aromatic hydrocarbon monomer units in the copolymer, of the vinyl aromatic hydrocarbon monomer units in at least one segment consisting of 1 to 3 vinyl aromatic hydrocarbon units. Said block copolymers were indicated to be used in shaped articles, having attractive stiffness, elongation, impact resistance, transparency and heat shrink ability, and clearly had a relatively low content of conjugated diene (5 to 40 wt%) relative to the weight of said block copolymer.

From **US 2003191241** block copolymers were known, which are to be used in compositions with large amounts of a thermoplastic resin selected from styrene resins, polyolefin resins and poly(phenylene ether) resins or of asphalt. Said block copolymers have at least two polymer blocks mainly comprising a vinyl aromatic hydrocarbon and further having at least one copolymer block comprising isoprene and 1,3-butadiene and/or at least one copolymer block comprising isoprene, 1,3-butadiene and a vinyl aromatic hydrocarbon., the block copolymers having a vinylaromatic hydrocarbon content of from 5 to less than 60 wt% and a total content of isoprene and butadiene from more than 40 to 95 wt%, and having an isoprene/1,3-butadiene weight ratio in the range of from 95/5 to 5/95, a vinyl bond amount less than 40 wt%, and exemplified number average molecular weights of from 30,000 to 500,000.

From **WO 02057386** adhesive compositions were known, comprising (i) one or more styrenic block copolymers, (ii) a tackifier resin, and (iii) one or more plasticizers wherein the or one of styrenic block copolymers was of the general formulae:

$$AC\text{-}A \text{ or } (A\text{-}C)_n\text{-}X,$$

wherein each A independently is a polymer block of an aromatic vinyl compound, and C is a mixed polymer block (B/I) of butadiene (B) and isoprene (I) in a weight ratio B:I in the range of 30:70 to 70:30, and wherein said polymer block C has a Tg of at most -50°C (determined according to ASTM 1356-98), wherein n is an integer equal to or greater than 2 and X is the residue of a coupling agent, and wherein the tackifying resin has an aromaticity (in relative percentage of aromatic protons as determined by H-NMR) in the range of from 3 to 18 %. More in particular all starting block copolymers were prepared by coupling of an intermediate living block copolymer by means of a coupling agent such as dibromoethane (EDB).

Bituminous compositions comprising thermoplastic elastomeric block copolymers derived from vinylaromatic and conjugated diene, to be used in roofing applications, were known from e.g. **US 5308676 ; US 5051457 ; US 5130354 ; US 4904713 ; US 5447775 ; US 5718752 ; US 6133350 ; US 5854335 ; WO 03082985 .**

More in particular from WO 03082985 bituminous compositions were known which comprised a bituminous component and a block copolymer which comprised at least two blocks of a conjugated diene and at least two blocks of a monovinylaromatic hydrocarbon, being of the general formula:

$$S_1\text{—}B_1\text{—}S_2\text{—}B_2$$

wherein B1 is a block of polymerised conjugated diene comprising at least 50 mole% isoprene having an apparent molecular weight of from 180,000 to 400,000, $S_1$ and $S_2$ are blocks of polymerised monovinylaromatic hydrocarbon having a weight average molecular weight of 12,000 to 40,000, and $B_2$ is a block of polymerised conjugated diene comprising at least 50 mole% isoprene having an apparent molecular weight of from 15,000 to 60,000; wherein the weight ratio W of $B_1$ over $B_2$ is in the range of from 3.0 to 12.0; and wherein the content of polymerised monovinylaromatic hydrocarbon is in the range from 10 to 35 wt%.

Preferably polymer blocks $B_1$ and $B_2$ each independently comprise at least 80 mole%, preferably at least 99 mole%, while said polymer blocks $S_1$ and $S_2$ each independently comprise at least 80 mole%, preferably at least 99 mole% styrene.

It will be appreciated that there is still a pressure for further improvements relating to the physical properties of block copolymers, in order to obtain acceptable end use adhesive properties of the final compositions, and more in particular for self adhesive roofing applications, wherein they are to be incorporated, in combination with their cost price, due to economical reasons.

It will be appreciated that an object of the present invention is to provide block copolymer compositions, which have derived from predominantly styrene and predominantly conjugated diene respectively and which provide an improved balance of properties of adhesive compositions and self adhesive roofing compositions, wherein they have been incorporated, and the manufacturing costs involved with their preparation.

More in particular an object of the present invention is to provide block copolymer compositions which enable bituminous self adhesive roofing compositions, having advantageous high and low temperature properties which are maintained over time, giving an acceptable estimated service life and which have derived from easily available and cheaper starting materials, i.e. to replace the conventionally used isoprene monomer partially by butadiene which is more available and is cheaper.

Said properties aimed at can be imparted by the use of specifically designed tailor made thermoplastic elastomeric block copolymers, having a specific structure and molecular weight and which are prepared by a one-pot flexible manufacturing process.

Another object of the present invention is providing an improved flexible one-pot manufacturing process for their preparation.

As result of extensive research and experimentation, said block copolymers and their manufacturing process aimed at, have now surprisingly been found.

**Disclosure of the invention**

Accordingly the present invention relates to block copolymer compositions comprising:

a) a tetrablock copolymer of the formula $S_1$ -$D_1$ -$D_2$ -$S_2$, wherein $S_1$ and $S_2$ represent the same or different polymer blocks of predominantly styrene
wherein $D_1$ and $D_2$ represent different polymer blocks, derived from at least one predominantly conjugated diene, and
b) a diblock copolymer of the formula $S_1$ -$D_1$ or $S_2$ -$D_2$.

Moreover, the present invention relates to a process for the manufacture of block copolymer compositions, comprising:

a) a tetrablock copolymer of the formula $S_1$ -$D_1$ -$D_2$ -$S_2$ , wherein $S_1$ and $S_2$ represent the same or different polymer blocks of predominantly styrene and wherein $D_1$ and $D_2$ represent different polymer blocks, derived from at least one predominantly conjugated diene,
b) a diblock copolymer of the formula $S_1$ -$D_1$ or $S_2$ -$D_2$, by sequential polymerization in the presence of a monovalent alkalimetal initiator and optionally a randomizing agent, of subsequently added predetermined amounts of predominantly styrene monomer and at least one predominantly conjugated diene, optionally mixed with another predominantly conjugated diene and/or predominantly styrene monomer, until substantially complete conversion of each monomer batch, followed by reinitiation with additional monovalent alkalimetal initiator or by partial termination of living polymers by addition of a proton donating agent, followed by polymerization of an subsequently added additional predetermined amount of at least one predominantly conjugated diene, optionally mixed with another predominantly conjugated diene, or predominantly styrene, and a predetermined amount of predominantly styrene monomer, until substantially complete conversion of each monomer batch, followed by termination of the living polymers and recovery of the block copolymers.

Another aspect of the present invention is formed by adhesive compositions or self adhesive roofing compositions, comprising the hereinbefore specified block copolymers.

**Mode(s) for carrying out the invention**

With the terms "predominantly poly(styrene) blocks", "predominantly styrene", "predominantly conjugated diene", "predominantly butadiene" and the like, as used throughout the present specification, is meant respectively that substantially pure homopolymer blocks, or copolymer blocks derived from one major monomer, i.e. at least 95 wt% and preferably more than 99 wt%, and a minor amount of structurally related comonomers or a minor amount of other comonomer(s) occurring in the final triblock copolymers, may be present in said block copolymers. More in particular butadiene and isoprene can occur as minor component in predominantly styrene and vice versa.

The predominantly styrene monomer may optionally be mixed with minor amounts (< 5 wt%) of monomers selected from alpha-methylstyrene, o-methylstyrene, p-methylstyrene, p-tert-butylstyrene, 1,3-dimethylstyrene, diphenylethene, or mixtures thereof. In a specific embodiment, divinylbenzene may be used as comonomer in the preparation of the last block ($S_2$), although this will result in the formation of more complex radial block copolymers.

More preferably substantially pure homopolymer blocks of styrene (more than 99.5 wt%) are included in the block copolymer compositions of the present invention.

The poly(butadiene) blocks or poly(isoprene) blocks may be substantially pure homopolymer blocks (main monomer content > 99.5 wt%) or blocks consisting of e.g. butadiene and minor amounts of other structurally related conjugated diene monomers, such as isoprene, 2,3-dimethyl, 1,3-butadiene, 1,3-pentadiene or 1,3-hexadiene or minor amounts of other comonomers occurring in the copolymer blocks and in particular styrene.

With the term "substantially identical", as used throughout the specification and claims, is meant that the molar weight ratio between predominantly poly(styrene) block of the diblock and the last introduced terminal predominantly poly(styrene) block of the multiblock copolymer, is within the range of from 0.95 to 1.05, preferably from 0.99 to 1.01 and is more preferably as close to 1.00 as possible. With the term apparent molecular weight" as used throughout the specification is meant the molecular weight of a polymer, as measured by Liquid High Performance Size Exclusion Chromatography (HPSEC), using several substantially pure poly(styrene) calibration standards, as described in ASTM D-5296-97. With the term "real molecular weight", as used throughout the specification, is meant the molecular weight of an isolated poly(styrene) block, measured by means of GPC, using several substantially pure poly(styrene) calibration standards, as described in ASTM D-5296-97.

The total average apparent molecular weight of the diblocks (b) is in the range of from 25,000 to 250,000 and preferably from 50,000 to 200,000. The total average weight of the tetrablocks (a) are in the range of from 50,000 to 600,000 and preferably from 100,000 to 450,000.

The diblock copolymer content in the block copolymer composition comprising a tetrablock copolymer is preferably in the range of from 10 to 90 wt% and more preferably from 20 to 80 wt%.

Preferred block copolymer compositions of the present invention are those,
wherein $D_1$ and $D_2$ blocks have been derived from substantially pure butadiene and from substantially pure isoprene respectively, while the blocks $S_1$ and $S_2$ have been derived from substantially pure styrene.

Alternatively, either $D_1$ or $D_2$ may be a block derived from a mixture of conjugated dienes, present either in a random fashion or in a tapered fashion (with a higher concentration of one monomer at one end of the block and a higher concentration of the other monomer at the other end of the block).

More preferred block copolymer compositions are those wherein the molar ratios between the predominantly styrene and the predominantly conjugated diene $S_1/D_1$ and $S_2/D_2$ respectively, are different.

The molar ratio between butadiene and isoprene in the tetrablock copolymer component (a) preferably is from 30:70 to 100:0 and in the diblock copolymer (b) from 0:100 to 85:15.

Preferred block copolymer compositions comprise a tetrablock copolymer $S_1$-$D_1$-$D_2$-$S_2$ (a) and a diblock copolymer $S_2$-$D_2$ (b), obtainable by sequential polymerization of predetermined batches of styrene and a conjugated diene, followed by reinitiation and co polymerization of batches of another conjugated diene and styrene.

In preferred block copolymer compositions the real molecular weight of the poly(styrene) blocks are in the range of from 10,000 to 40,000 g/mole, preferably from 10,000 to 30,000 g/mole.

More preferred block copolymer compositions have a poly(styrene) content in the tetrablock copolymer (a) in the range of from 10 to 55 wt%, preferably from 15 to 35 wt% and in the diblock copolymer (b) in the range of from 10 to 55 wt%, preferably from 15 to 35 wt%, wherein the poly(styrene) content need not be the same.

It will be appreciated that to the block copolymer compositions according to the present invention one or more stabilizing agents and/or specifically selected acids for solubilization and extraction of lithium or other metal residues from organometal initiators can be added to the initially obtained block copolymers which have to be recovered further.

Preferably a tetrablock copolymer $S_1$-$D_1$-$D_2$-$S_2$ and a diblock copolymer $S_2$_$D_2$ are prepared by sequential polymerization of substantially pure styrene and a mixture of substantially pure butadiene and isoprene, in the presence of a monovalent alkalimetal initiator until substantially complete conversion and optionally a randomizing agent, followed by reinitiation with additional monovalent alkalimetal initiator, followed by copolymerization of an additional predetermined amount of isoprene and of substantially pure styrene monomer until substantially complete conversion.

A preferred monovalent organolithium initiator is sec-butyllithium, although tert.butyllithium or n-butyllithium may also be used with good results.

With the term "randomizing agent", as used throughout the present specification, is meant any an ether having one or more oxygen or amine having one or more nitrogen atoms, either as straight chain or cyclic compound. Examples thereof may be found, for instance in **US 5773521** (column 4, lines 42-60, incorporated herein by reference).

The solvent to be used for the preparation of the block copolymer(s) is a hydrocarbon diluent or mixture thereof. Preferably the hydrocarbon diluent is a paraffinic, cycloparaffinic or amomatic hydrocarbon having 4 to 10 carbon atoms or a mixture of such diluents. Examples for the diluent are n-hexane, n-heptane, cyclohexane, cyclopentane and the like. The reaction is generally carried out with a weight ratio of solvent to monomers exceeding 1. Preferably the solvent is employed in a quantity between 4 to 20 parts by weight per 1 part by weight of total monomers.

It will be appreciated that the preparation of the tetrablock constituent, mixed with a diblock copolymer, obtainable by reinitiation, can be carried out in one single reactor equipped with a recycling condenser or in a dual reactor system.

The initially prepared living block copolymer compositions, i.e. block copolymers containing an activated metal atom, are to be inactivated by addition of a proton donating agent, such as alcohols and in particular lower alkanols having of from 1 to 4 carbon atoms or hydrogen of which methanol or water are preferred.

All of the polymers of this invention can have incorporated therein conventional ingredients such as antioxidants, UV stabilizers, agents to protect against ozone, fillers, pigments, other resins and -in case of certain utilities such as adhesives, materials such as plasticizers, tackifiers and solvents.

The final polymer product is separated from the reaction mixture by standard techniques, such as steam stripping or coagulation with a suitable non-solvent such as alcohol. The coagulated or stripped polymer can then be removed from the resulting medium by e.g., centrifugation or extrusion. Residual solvent and other volatiles can be removed from the isolated polymer by heating, optionally under reduced pressure or in a forced air flow.

Use of block copolymer compositions

The block copolymer compositions of the present invention are useful as modifiers in bituminous compositions and more in particular in self adhesive roofing compositions or in adhesive compositions for tapes, labels and the like.

The bituminous component present in said compositions may be a naturally occurring bitumen or derived from a mineral oil. Also petroleum pitches obtained by a cracking process and coal tar can be used as the bituminous component as well as blends of various bituminous materials. Examples of suitable components include distillation or "straight-run bitumens", precipitation bitumens, e.g. propane bitumens, blown bitumens, e.g. catalytically blown bitumen or "Multiphate", and mixtures thereof. Other suitable bituminous components include mixtures of one or more of these bitumens with extenders (fluxes) such as petroleum extracts, e.g. aromatic extracts, distillates or residues, or with oils. Suitable bituminous components (either "straight-run bitumens" or "fluxed bitumens") are those having a penetration of in the range of less than 400 dmm at 25 °C, with 50 to 250 dmm generally preferred. Therefore quite hard bitumens of a penetration of from 60 to 70 dmm may be used, but generally a straight run or distilled bitumen having a penetration in the range of from 150 to 250 dmm will be the most convenient to use. Both compatible as well as incompatible bitumens may be used.

The polymer modifier is suitably present in the bituminous composition in an amount in the range of from 6 to 30% by weight (based on the total of bituminous component and block copolymer), more preferably from 5 to 15% by weight.

The bituminous composition may also, optionally, contain other ingredients such as may be required for the end-use envisaged. Thus fillers may be included, for example fly ash, wood floor, siliceous fillers such as silicates, talc, calcareous fillers such as calcium carbonate, carbon black, or other components including resins, oils, stabilisers or flame retardants may be incorporated. The content of such fillers and other components may be in the range of from 0 to as much as 80% by weight, based on the weight of the mixture. Of course, if advantageous, other polymer modifiers may also be included in the bituminous composition of the invention.

The useful low temperature and high temperature properties of the polymer-bitumen blends of the present invention enables such blends to be of significant benefit in uses where the blends are exposed to external weather conditions, such as use in roofing applications, for example as a component of self-adhesive shingles or roofing felt membranes. The usefully low high-temperature viscosity not just means that the polymer-bitumen blends can be more easily processed but also means that they enable a greater amount of filler to be incorporated before the maximum allowable processing viscosity is achieved, and thus leads to a cheaper product in those applications where fillers are commonly used. The bituminous compositions may also find use in paving, carpet backing, coatings and such like.

Other applications in which the polymers themselves may be of use are in sound deadening, in adhesive, sealant or coating compositions and/or in vibration dampening compositions.

It will be appreciated that the block copolymer compositions surprisingly have been found to provide end use properties to bituminous self adhesive roofing compositions, which are almost equal or even better than those of similar compositions, comprising the presently available most suitable block copolymers for this purpose, which are known from e.g. WO 03/082985, while their cost price is significantly lower due to the higher butadiene contents.

The present invention will hereinafter be illustrated more specifically by the following examples, however without restricting the scope to these specific embodiments.

Synthesis of block copolymer with sequential polymerisation reinitiation (Polymers 1-4)

Four experiments were performed.

A 10 litre stainless steel reactor was charged with 4.67 kg (6 ltr) cyclohexane, purified with Alcoa alumina and was heated to 60°C. A calculated amount of sec-butyl lithium was charged, immediately followed by an amount of purified and stripped styrene. After a reaction time a calculated second charge of styrene was dosed to obtain a predetermined Step I target molecular weight. After styrene depletion a calculated amount of purified diene was added to the reactor at 70°C with a dosing rate of approximately 60 g/min. After diene depletion the calculated second charge of sec-butyl lithium was added, immediately followed by a second charge of diene. After a reaction time a calculated amount of styrene was added. After completion of the reaction, the reaction mixture was terminated with 0.3 molar equivalents of methanol.

Thereafter the contents of the reactor were discharged in a vessel and 0.08 % wt of antioxidant on polymer was added. The cement was finished by steam coagulation and the obtained crumbs were dried overnight at 40°C in an oven.

The molecular weights of the different polymers were measured by HPSEC (ASTM D-5296-97). The PSC, butadiene and isoprene contents of the finished polymers were measured by H-NMR in CDCl$_3$ (20 mg/l) at "GE 300" NMR equipment. The details of the respective block copolymers have been listed in Table 1.

**Table 1**

| polymer | | 1 | 2 | 3 | 4 |
|---|---|---|---|---|---|
| Step 1 | *Kg/mole* | 11.2 | 13.7 | 24.5 | 11.0 |

Table continued

| polymer | | 1 | 2 | 3 | 4 |
|---|---|---|---|---|---|
| diblock | % | 27.3 | 16.7 | 13.9 | 26.1 |
| PSC tetrablock | % | 18.7 | 30.0 | 25 | 22.3 |
| PSC diblock | % | 18.7 | 30.0 | 50 | 18.5 |
| MW apparent tetrablock | *KG/mole* | 192 | 152 | 299 | 161 |
| Mw apparent diblock | *Kg/mole* | 87 | 85 | 72 | 94 |
| Bd/Ip diblock | *wt ratio* | 0/100 | 84/16 | 0/100 | 0/100 |
| Bd/Ip tetrablock | *Wt ratio* | 41/59 | 56/44 | 93/7 | 31/69 |

The block polymer **3** according to the invention is compared with the reference polymers listed in Table 2. This table also contains further components of the bituminous composition.
**Table 2**

| SBS1 | KRATON® D1184, a branched block copolymer based on styrene and butadiene, frequently used as modifier of bitumen in roofing felt coating compounds, roads and pipe coating, having a PSC of about 30 w% |
|---|---|
| SBS2 | KRATON® D KX-219, an experimental branched block copolymer based on |
| | styrene and butadiene, having an elevated vinyl content of about 40 w%, and a PSC of 30 about w% |
| SB | KRATON® D1118, an 20/80 blend of SBS/SB block copolymer based on styrene and butadiene, having a PSC of about 31 w% |
| Polymer A | Block copolymer of the type $S_1$-I-$S_2$-i, characterized by a molecular weight kg/mole:$S_1$ =28.0, I=274.4, $S_2$ =28.1, 2 i=40.2; PSC (wt%)=22 and a weight ratio of I over i of 6.2 |
| SIS | KRATON® D1163, a linear block copolymer based on styrene and isoprene, having a PSC of 15 w% |
| Oil | Naphthenic oil, N965 EDELEX™ from Shell |
| Resin | Tackifying resin, HERCOTAC™ 205 from Eastman |
| Bitumen A | PX200, a low asphaltenes (7 w%) content bitumen and highly compatible for polymers composed of 65% propane bitumen and 35% Bright Furfural extract |

Preparation of bituminous compositions
Compositions as described in Table 2 were made with a Silverson L4R high shear mixer. The bitumen was heated to 160 °C and subsequently the polymer(s) and/or other additives were added. Upon blending, the temperature increased to 180 °C caused by the energy input from the mixer. Blending at this temperature was continued until a homogeneous blend was obtained, as determined by fluorescence microscopy.
Specimen for adhesion testing
The roofing sheets for adhesion testing (T-Peel ASTM D1876-93) were prepared by pouring 55 grams of the composition in a 230 mm by 160 mm by 1.5 mm spacer and covering with a polyester carrier. Covered with silicon paper, the sample was placed in a hydraulic press and pressed for five minutes with a load of 67.5 kN at 140 °C. After a cooling period of ten minutes, a second spacer was placed on the other side of the carrier and filled with an additional 55 grams of compound. Pressing again created an artificial roofing sheet 3 mm thick. The roofing sheet thus created was cut from its spacers. Specimen for T-Peel testing measuring 25 X 200 mm were cut from the sheet.
Test methods
**A standard evaluation** on the blends was carried out - the determination of the penetration at 25°C, softening point, viscosity, DIN flow resistance and cold bend. (F. de Bats, Analysis of the DIN flow test and cold bending test for water proofing membranes, 'green cover' issue of Shell International Petroleum Company Limited.)
**T-peel testing**: The adhesive performance of a formulation for self-adhesion was determined by welding two membranes of equal composition and subsequently separating them in a T-geometry with a tensile tester. The force (N/ 25mm) necessary to separate the membranes is a measure of the adhesive bond strength.

The adhesive bond strength of the various compounds was determined at 5 °C and 21 °C. Conditioning at 5 °C was achieved by placing the membranes in a refrigerator for at least 12 hours and welding immediately when taken from the refrigerator, followed by immediate T-peel testing. Specimens welded at ambient temperature were stored for at least 12 hours before peel testing. The welding at both temperatures was established by rolling a weight of 1.0 kg for 10 times over the membranes. Adhesion was prevented over a length of 50 mm by covering the ends of the membranes with silicon paper.

T-peel tests were carried out with an Instron 4501 tensile tester. The free ends were clamped in the grips and then separated at a constant rate of displacement of 254 mm/min according to ASTM D1876-93.(Annual book of ASTM standards, Volume 15.06, Standard test method for peel resistance of adhesives (T-peel test), ASTM D1876-93.)

**Tack** of the membranes is an important product parameter for quick bonding, especially at low (<10 °C) welding temperatures. In this investigation the tack was not analysed quantitatively. Rather, its performance was assessed manually. Tack may be quantified by standardised adhesive tests such as Polyken probe and loop tack.

**SARA (Saturates Aromatics Resins Asphaltenes)** analysis determines in broad sense the chemical composition of the bitumen. With the SARA method, the asphaltenes present in the bitumen were first separated from the maltenes by precipitation in n-heptane. Subsequently, the asphaltenes content was determined gravimetrically. The resins, aromatics and saturates remaining in the maltenes fraction were separated and quantified by means of HPLC. ("Rapid Bitumen Analysis by High Pressure Chromatography," Construction & Building Materials, Vol. 6, No. 3, 1992.)

The test results have been listed in Table 3.

**Table 3**

| Experi ment | 1 | 2 | 3 | 4 | 5 | 6 | 7 | 8 |
|---|---|---|---|---|---|---|---|---|
| Bitumen A | 88 | 88 | 88 | 86 | 84 | 64 | 86 | 86 |
| SBS1 | 12 | - | - | - | - | - | - | - |
| SBS2 | - | 12 | - | 8 | 4 | 4 | - | - |
| SIS | - | - | 12 | 6 | 4 | 4 | - | - |
| SB | - | - | - | - | 8 | 8 | - | - |
| Polymer A | | - | - | - | - | - | 14 | - |
| Polymer 3 (accordi ng to the invention | | - | - | - | - | - | - | **14** |
| Oil | - | - | - | - | - | 10 | - | - |
| Resin | - | - | - | - | - | 10 | - | - |
| T-peel at 5 °C, N | 10 | 6 | 48 | 11 | 15 | 33 | 38 | **2** |
| T-Peel at 21 °C, N | 29 | 36 | 105 | 77 | 58 | 77 | 78 | **56** |
| R&B, °C | 120 | 128 | 75 | 118 | 110 | 102 | 121 | **129** |
| DIN flow, pass °C | 105 | 105 | 55 | 100 | 95 | 85 | 100 | **105** |
| Cold bend, pass °C | -40 | -30 | -30 | -35 | -40 | -30 | -35 | **-30** |

T-Peel test according to ASTM D1876

<u>Results</u>

A coating for self-adhesion should have both good tack and adhesive strength, so one can 'put it down and forget it', especially at lower temperatures. However, commercially available styrenic block copolymers that provide these properties unfortunately provide insufficient flow resistance for typical roofing applications.

Table 3 presents the results of evaluations of various styrenic block copolymers in a 200 pen reference bitumen. It is a reprint of the results evaluated in the co-pending application **WO 03082985 .** In said application it was already indicated that the butadiene based styrenic block copolymers SBS1 and SBS2, which are commonly used in roofing applications, only provide good rheological properties, while in this case the adhesive strength is rather poor at ambient temperature but especially at low temperature. The SIS polymer gives excellent adhesion at low temperature. However, a flow resistance of 50°C is not sufficient for adequate performance. Mixing SBS and SIS, to combine the desired adhesion and rheological properties provides a better balance. However, in this case the adhesive strength at low temperature has not significantly improved. Addition of SB di-block reduces the flow resistance and slightly improves the adhesion at low temperature.

The addition of naphthenic oil and tackifying resin increases adhesion for reasons described below. For this specific formulation a good balance in properties is obtained. Unfortunately, six different ingredients are required, which complicates production safety.

Experiment 7 is an experiment according to **WO 03082985** . Although this polymer exhibits an outstanding set of properties, it should be realized that this is reached using a block copolymer component which has been derived solely from isoprene, which is more expense and in available in more limited supply then butadiene.

Experiment 8 is not yet optimized in that the low temperature peel may be improved even if at the detriment of some high temperature R&B properties. Still, this experiment shows results that are better than those of experiment 1, 2, 3 and 4 and at least comparable to experiment 5. It is therefore clear that the new block copolymers of the invention are a very attractive alternative solution to the polymers of **WO 03082985 .**

**Claims**

1. Block copolymer compositions comprising:

   a) a tetrablock copolymer of the formula $S_1$-$D_1$-$D_2$-$S_2$, wherein $S_1$ and $S_2$ represent the same or different polymer blocks of predominantly styrene wherein $D_1$ and $D_2$ represent different polymer blocks, derived from at least one predominantly conjugated diene,
   b) a diblock copolymer of the formula $S_1$ -$D_1$ or $S_2$ -$D_2$.

2. Block copolymer compositions according to claim 1, wherein the molar ratios between the predominantly styrene and the predominantly conjugated diene $S_1/D_1$ and $S_2/D_2$ respectively, are different.

3. Block copolymer compositions according to claim 1 and 2, wherein the $D_1$ 1 and $D_2$ blocks have been derived from substantially pure isoprene and/or substantially pure butadiene.

4. Block copolymer compositions according to claims 1-3, wherein $S_1$ and $S_2$ have been derived from substantially pure styrene.

5. Block copolymer compositions according to claim 3, wherein the molar ratio between butadiene and isoprene in the component (a) is from 30:70 to 100:0 and in the component (b) is from 0:100 to 85:15.

6. Block copolymer compositions according to claim 1, comprising as component (b) a diblock copolymer $S_2$ -$D_2$.

7. Block copolymer compositions according to claim 6, wherein the Mw apparent of component (a) is in the range of from 180,000 to 400,000 and the Mw apparent of component (b) is in the range of from 125,000 to 350,000 g/mole.

8. Block copolymer compositions according to claims 1-6, wherein the polystyrene content is in the tetrablock copolymer in the range of from 15 to 35 wt% and in the diblock copolymer is in the range of from 15 to 50 wt%.

9. Process for the manufacture of block copolymer compositions, comprising:

   a) a tetrablock copolymer of the formula $S_1$-$D_1$-$D_2$-$S_2$ , wherein $S_1$ and $S_2$ represent the same or different polymer blocks of predominantly styrene and wherein $D_1$ and $D_2$ represent different polymer blocks, derived from at least one predominantly conjugated diene,
   b) a diblock copolymer of the formula $S_1$-$D_1$ or $S_2$-$D_2$ , by sequential polymerization in the presence of a monovalent alkalimetal initiator and optionally a randomizing agent, of subsequently added predetermined amounts of predominantly styrene monomer and at least one predominantly conjugated diene, optionally mixed with another predominantly conjugated diene and/or predominantly styrene monomer, until substantially complete conversion of each monomer batch, followed by reinitiation with additional monovalent alkalimetal initiator or by partial termination of living polymers by addition of a proton donating agent, followed by polymerization of an subsequently added additional predetermined amount of at least one predominantly conjugated diene, optionally mixed with another predominantly conjugated diene, or predominantly styrene, and a predetermined amount of predominantly styrene monomer, until substantially complete conversion of each monomer batch, followed by termination of the living polymers and recovery of the block copolymers.

**10.** Process according to claim 9, wherein a tetrablock copolymer $S_1$-$D_1$-$D_2$-$S_2$ and a diblock copolymer $S_2$-$D_2$ are prepared by sequential polymerization of substantially pure styrene and a mixture of substantially pure butadiene and isoprene, in the presence of a monovalent alkalimetal initiator until substantially complete conversion and optionally a randomizing agent, followed by reinitiation with additional monovalent alkalimetal initiator, followed by copolymerization of an additional predetermined amount of isoprene and of substantially pure styrene monomer until substantially complete conversion.

**European Patent Office**

**EUROPEAN SEARCH REPORT**

Application Number

EP 04 10 6975

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DATABASE WPI<br>Section Ch, Week 200278<br>Derwent Publications Ltd., London, GB;<br>Class A14, AN 1995-348376<br>XP002321018<br>& JP 03 339172 B2 (NIPPON ZEON KK)<br>28 October 2002 (2002-10-28)<br>* abstract *<br>----- | 1-10 | C08F297/04<br>C09J153/02<br>C09J195/00 |
| D,A | WO 03/082985 A (KRATON POLYMERS RESEARCH B.V; TROMMELEN, ERIC, A., T; VAN DIJK, MARTIN) 9 October 2003 (2003-10-09)<br>* page 8, line 29 - line 30; claims *<br>----- | 1-10 | |
| | | | TECHNICAL FIELDS SEARCHED (Int.Cl.7) |
| | | | C08F<br>C09J<br>C08L<br>C09D |

The present search report has been drawn up for all claims

| Place of search | Date of completion of the search | Examiner |
|---|---|---|
| Munich | 14 March 2005 | Wirth, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 10 6975

This annex lists the patent family members relating to the patent documents cited in the above-mentioned European search report.
The members are as contained in the European Patent Office EDP file on
The European Patent Office is in no way liable for these particulars which are merely given for the purpose of information.

14-03-2005

| Patent document cited in search report | | Publication date | Patent family member(s) | | Publication date |
|---|---|---|---|---|---|
| JP 3339172 | B2 | 28-10-2002 | JP | 7238132 A | 12-09-1995 |
| WO 03082985 | A | 09-10-2003 | EP | 1348737 A1 | 01-10-2003 |
| | | | AU | 2003226718 A1 | 13-10-2003 |
| | | | BR | 0308724 A | 28-12-2004 |
| | | | WO | 03082985 A1 | 09-10-2003 |
| | | | EP | 1492844 A1 | 05-01-2005 |

EPO FORM P0459

For more details about this annex : see Official Journal of the European Patent Office, No. 12/82